# EUROPEAN PATENT SPECIFICATION

(11) **EP 3 802 403 B1**
(45) Date of publication and mention of the grant of the patent: **27.03.2024**
(21) Application number: 19731461.0
(22) Date of filing: 29.05.2019
(51) Int. Cl.: B68G 7/06, A43B 13/18, A43B 17/02

(54) **MANUFACTURING SYSTEM FOR A CUSHIONING FOOTWEAR**
HERSTELLUNGSSYSTEM FÜR SCHUHWERK MIT DÄMPFUNG
SYSTÈME DE FABRICATION D'UNE CHAUSSURE À REMBOURRAGE

(30) Priority: 30.05.2018 US 201862678041 P; 28.05.2019 US 201916424078
(43) Date of publication of application: 14.04.2021
(73) Proprietor: NIKE Innovate C.V., Beaverton, OR 97005 (US)
(72) Inventor: HA, TaeSoo, Gimhae-si, Gyeongsangnam-do 50932 (KR); LEE, Jong Keun, Gimhae-si, Gyeongsangnam-do 50932 (KR); LEE, Sang Hee, Gimhae-si, Gyeongsangnam-do 50932 (KR); PARK, Dae Young, Gimhae-si, Gyeongsangnam-do 50932 (KR); PARK, John J., Gimhae-si, Gyeongsangnam-do 50932 (KR); PARK, SungChul, Gimhae-si, Gyeongsangnam-do 50932 (KR)
(74) Representative: Müller-Boré & Partner Patentanwälte PartG mbB
(86) International application number: PCT/US2019/034411
(87) International publication number: WO 2019/232062

(56) References cited:
- WO-A1-2016/151606
- DE-B1- 2 336 136
- DE-C1- 3 605 662
- US-A- 2 359 029
- US-A- 2 725 927
- US-A1- 2009 313 853

## Description

### BACKGROUND OF THE INVENTION

Traditional methods and systems for forming a cushioning article, such as a shoe sole portion, include injection molding or otherwise molding the article from a homogenous foamed polymeric composition. The conformance and impact attenuation of the cushioning article depended on the characteristics of the foamed composition, such as resilience. However, in some instances, to conform the cushioning article a pre-loaded stress is applied to the cushioning article, which affects an ability of the cushioning article to attenuate impact forces while preloaded.

WO 2016/151606 A1 describes an automatic machine for inserting in an homogeneous and metered manner into stuffed articles of various kind, in particular but not exclusively clothes articles, of stuffing material of various kind such as for example polyester fibres, plumage and the like, adapted to maintain the heat into the same articles, comprising a collecting and stocking container of the stuffing material, adapted to contain the stuffing material being picked up by means of transfer means from bags or containers provided by the producing and transforming firms of the same material, the machine comprising also weighing containers communicating with said container, and loading cells of the stuffing material loaded into the weighing containers, for weighing the quantities of the stuffing material to be inserted into the pockets or spaces of each clothes article, characterized by injection means (injection station 7) of the stuffing material into the pockets or spaces of each clothes article, and by a control panel including a main control device connected in the machine electric circuit and adapted to set, control and survey the different operative programs of the machine, and characterized in that said collecting and stocking container is constituted by an upper chamber and an underlying lower chamber, communicating to each other and enclosed and supported on the upper part of a metallic vertical structure, which is projected downward for forming a lower part supported on to the floor by vertical legs, that said weighing containers communicate at the lower part with said lower chamber and are adapted to collect and weigh the stuffing material fallen from said lower chamber, in such metered quantities as to fill a pocket or space at a time of each clothes article, that said loading cells are each one formed by at least an electric or electronic sensor, a balance or the like, disposed below the relative weighing container of the machine and adapted to detect the weight of the stuffing material contained into the same container, and to generate correspondent electric or electronic signals corresponding to the weight which has been detected from time to time, which signals are transmitted through the machine electrical circuit toward said main control device, which provides for recognizing the same signals and indicating the correspondent weight which has been measured, and the so weighed quantity of stuffing material contained into each weighing container is transferred from this latter toward said injection station for being introduced into the pockets or spaces of each clothes article.

### SUMMARY OF THE INVENTION

The claimed invention is defined by the features set forth in the appended independent claim. Particularly, aspects hereof contemplate filling a cushioning pod with a plurality of discrete and independent foamed beads that conform to a shape of the cushioning pod. The independent and discrete nature of the foamed beads allow for a reconfiguration of the plurality of beads to conform to a static position, such as a wearer's body portion. The system for filling a cushioning pod with a plurality of beads includes a bead source, a weighing station, a metering station, and a filling station to effectively fill a pod with a target amount of the plurality of beads. The beads are conveyed through the system, at least in part, with a fluid injection nozzle that is effective to generate at least one of a positive pressure and/or a negative pressure within the coupling through which the beads are conveyed. The system may also include a bead nozzle that has two portions magnetically coupled to further enhance the efficiency and timing of a filling operation. Additional embodiments of the claimed invention are defined by the dependent claims.

### BRIEF DESCRIPTION OF THE DRAWING

The present invention is described in detail herein with reference to the attached drawing figures, wherein:
FIG. 1 depicts an exemplary system for filling a cushioning pod with a plurality of beads, in accordance with aspects hereof;
FIG. 2 depicts an enhanced system for filing a cushioning pod with a plurality of beads, in accordance with aspects hereof;
FIG. 3 depicts an exemplary weighing station, in accordance with aspects hereof;
FIG. 4 depicts an exemplary metering station in cross section, in accordance with aspects hereof;
FIG. 5 depicts an isometric view of an exemplary fluid-powered funnel of the metering station illustrated in FIG 4, in accordance with aspects hereof;
FIG. 6 depicts a top view of the fluid-powered funnel of FIG. 5, in accordance with aspects hereof;
FIG. 7 depicts a first cross section view of the fluid-powered funnel of FIG. 5, in accordance with aspects hereof;
FIG. 8 depicts a second cross section view of the fluid-powered funnel of FIG. 5, in accordance with aspects hereof;
FIG. 9 depicts an exemplary bead nozzle in a decoupled configuration, in accordance with aspects hereof;
FIG. 10 depicts the bead nozzle of FIG. 9 in a coupled configuration, in accordance with aspects hereof;
FIG. 11 depicts a cross section of the bead nozzle from FIG. 10, in accordance with aspects hereof;
FIG. 12 depicts an exemplary filling fixture, in accordance with aspects hereof;
FIG. 13 depicts an exemplary cushioning pod assembly filled with a plurality of beads, in accordance with aspects hereof;
FIG. 14 depicts a cross section view of the cushioning pod assembly of FIG. 13, in accordance with aspects hereof;
FIG. 15 depicts a cross section view of a cup sole with a top cloth as a cushioning pod, in accordance with aspects hereof;
FIG. 16 depicts a flow chart represent a method of filling a cushioning pod, in accordance with aspects hereof;
FIG. 17 depicts a fixture for positioning one or more bead nozzles in a cushioning pod integral to a footwear sole component for filling, in accordance with aspects hereof;
FIG. 18 depicts the fixture of FIG. 17 securing bead nozzles for filling a cushioning pod integral to a footwear sole component, in accordance with aspects hereof;
FIG. 19 depicts a ground-facing surface of the footwear sole component of FIG. 18, in accordance with aspects hereof;
FIG. 20 depicts a bottom perspective of FIG. 19, in accordance with aspects hereof; and
FIG. 21 depicts a cross sectional view of the footwear sole component of FIG. 18 subsequent to filling portions with a plurality of beads, in accordance with aspects hereof.

### DETAILED DESCRIPTION OF THE INVENTION

Cushioning provides a support or a dampening effect for a force impact. A cushion may be formed from a variety of materials and techniques. A cushioning pod, as provided herein, is a cushion formed from a plurality of independent and discrete elements, such as a plurality of beads, which are contained within an enclosure. The discrete elements, which are generically referred to as "beads" herein are individual and discrete particulate matter elements of any size, material, or shape. A bead, in an exemplary aspect is a rounded surface, such as a spheroid. Each of the plurality of beads may have a different size and/or shape. Having a plurality of independent and discrete beads allows the beads to move relative to each other to conform and shape to a static surface against which they are presented. The static surface, in an exemplary aspect, is a bottom surface of a human foot when the cushion forms a sole portion for an article of footwear. The conformance through relative repositioning of the discrete and independent beads allows for the article to form to the surface in ways additional to deformation of each of the beads. This allows for a greater conformance with reserved deformation ability to absorb and/or attenuate impact forces by the plurality of beads.

A cushioning pod is contemplated as a cushion that is implemented in a variety of use scenarios. Non-limiting examples of cushioning pod implementations include use as a portion of an article of footwear, such as a shoe. For example, a cushioning pod may be used as a least a portion of a sole for an article of footwear. In an exemplary aspect, the cushioning pod forms a midsole having a separate and distinct outsole attached forming a ground-contacting surface. In yet another example, the cushioning pod is contemplated as integral to the sole such that a portion of the pod forms an outsole portion. It is also contemplated that a cushioning pod may be implemented in a variety of alternative articles, such as athletic equipment, protective equipment, apparel, and the like.

Because a cushioning pod is formed from the enclosure of a plurality of discrete elements, a cushioning pod may be adjusted through manipulation of the discrete elements and/or the material forming the cavity having the beads. For example, different sizes, combination of sizes, different materials, different sizes of elements, different quantities of elements, different volumes of elements, different densities of elements, and the like may all may adjusted to achieve a target cushioning characteristic of a cushioning pod. Further, two or more cushioning pods may be used in conjunction that allow for greater variability. As will be provided herein, it is contemplated that a plurality of cushioning pods may be simultaneously formed having different characteristics to provide alternative cushioning profiles for different portions of the totality of the cushioning pod construction.

As the cushioning pod is formed from a plurality of discrete elements, such as a plurality of beads, control of the plurality of elements inserted into a cushioning pod is attempted for a consistent cushioning pod result. Therefore, aspects provided herein support a system and method of manufacturing of the cushioning pod that is controlled, consistent, and customizable. The systems and methods herein allow for varied, but intentional, cushioning pod creation.

The claimed invention provides a system for filling a cushioning pod with a plurality of beads as set forth in the appended independent claim. The filling station may be fluidly coupled with the bead source. As used herein, fluidly coupled is a connection that allows for the conveyance of a bead-like element. The coupling may be a closed coupling, such as a tubular coupling, or it may be an open coupling, such as a chute or conveyor. The fluid may be a gas, such as ambient air that is pressurized to form a fluid stream. At least a portion of the fluid coupling is configured to transport the plurality of beads from the bead source to the cushioning pod. Accordingly, the fluid stream may help propel the plurality of beads along the fluid coupling. Gravity may also be leveraged to convey the plurality of beads through one or more portions of the system. The bead nozzle as will be discussed in greater detail hereinafter may be formed from at least two portions. A first portion that interfaces with the cushioning pod and a second portion that is fluidly coupled with the fluid coupling of the system. The second portion of the bead nozzle may be connected with a tubular structure such that beads passing through the system are directed to the second portion. The first portion and the second portion of the bead nozzle may then removably couple to allow for the insertion of the plurality of beads from the system into the cushioning pod.

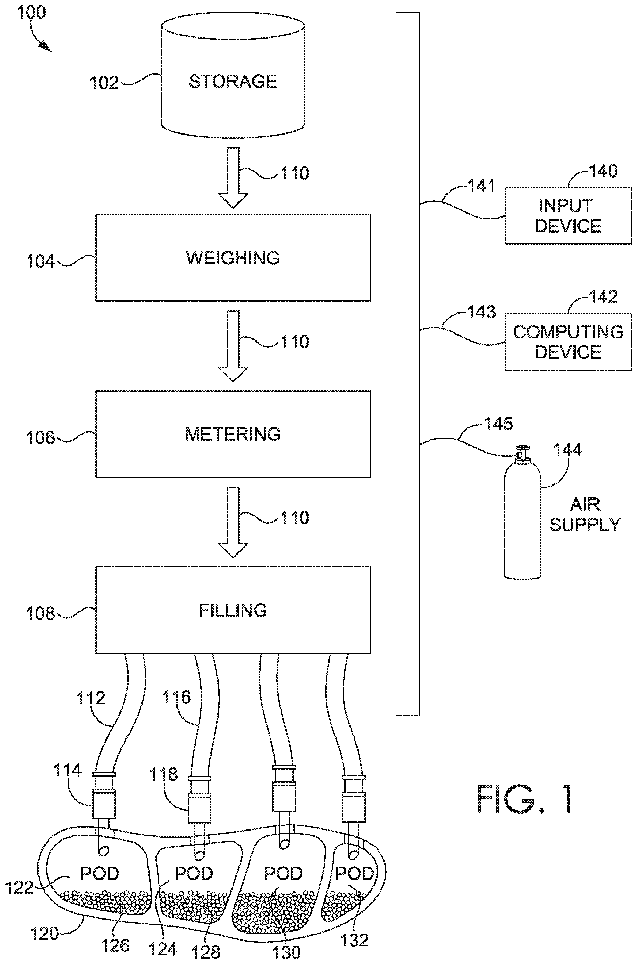

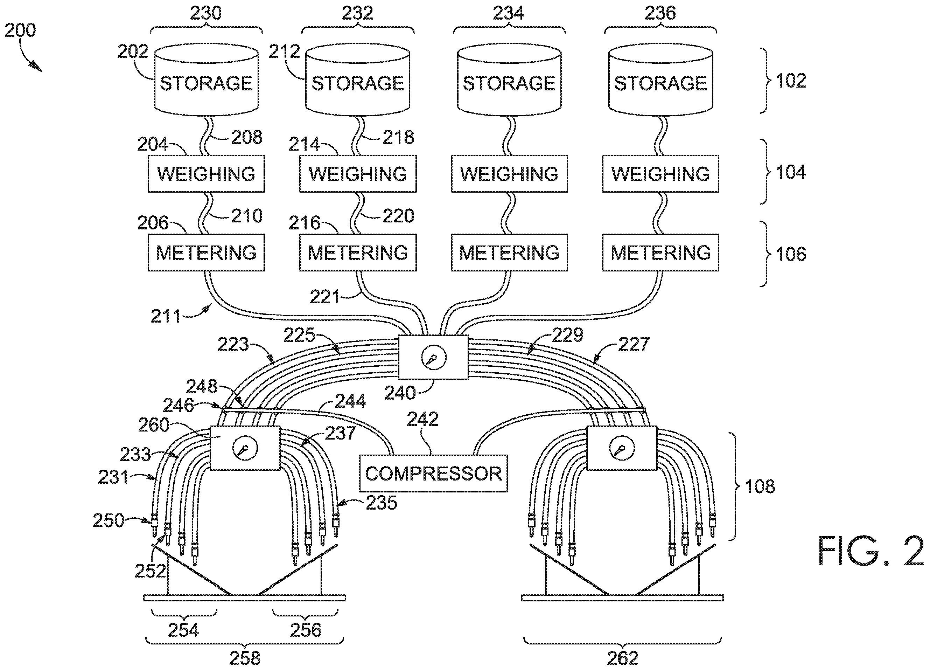

Turning to FIG. 1 depicting a system 100 for filling a cushioning pod with a plurality of beads, in accordance with aspects hereof. The system includes a storage station 102, a weighing station 104, a metering station 106, a filling station 108, an input device 140, a computing device 142, and a fluid source 144. As will be provided in greater detail hereinafter, it is contemplated that any number, combination, and/or configuration of the various elements provided in FIG. 1 may be implemented, as will be depicted in an exemplary manner in FIG. 2 hereinafter.

The storage station 102 is a source for elements to be inserted into a cushioning pod. The storage station 102 is a bead source that is configured to maintain a plurality of beads. For example, the storage station 102 may include a hopper or other vessel sufficient to maintain a plurality of beads for access by the system to be inserted into a cushioning pod. The storage station 102 may include conveyance mechanisms, such as an auger, conveyor, or other material-transport mechanism. In some aspects the storage station 102 is positioned vertically above subsequent stations to leverage gravitational pull on the plurality of beads to assist in conveyance of the beads through the system. The conveyance mechanism allows bulk quantities of beads to be loaded at a level lower than the storage station 102, e.g., ground level, and transported to a higher relative position for eventual distribution into the system 100.

The plurality of beads may be formed from any material and be of any size. In an exemplary aspect the beads of the plurality of beads are formed from a polymeric composition. In an exemplary aspect, the beads are a foamed polymeric composition. For example, the beads may be a thermoplastic elastomer ("TPE"). Examples of generic classes contemplated as TPEs include styrenic block copolymers, thermoplastic polyolefineatomers, thermoplastic vulcanizates, thermoplastic polyurethanes ("TPU"), thermoplastic copolyesters, and thermoplastic polyamides. A foamed TPE is a TPE having open cell or closed cell voids that produce a lower density material relative to a non-foamed version of the same. The foamed concept aids in a reduction of mass for the plurality of beads to keep the cushioning pods light and can enhance cushioning characteristics of the beads. Non-polymeric compositions are also contemplated as forming a bead, such as organic materials. Further, it is contemplated that a variety of material compositions as a hybrid composition and/or heterogeneous collection of beads may form the plurality of beads.

The plurality of beads may have any shape, such as a spheroid shape. The shape may be regular or irregular. The shape may be consistent or inconsistent. The shape, size, and/or type of bead may vary between one portion of the cushioning pod and a second portion of the cushioning pod. In an exemplary aspect, the average size of the plurality of beads is in a range of about 1 mm to about 10 mm in diameter. In an exemplary aspect, the average diameter is in a range of about 2 mm to about 6 mm. In an exemplary aspect, the average diameter is in a range of about 3 mm to about 4 mm. While any size of bead may be implemented, the provided ranges provide a range for which the fluid coupling, the weighing station 104, the metering station 106, and the filling station 108 are configured to optimally convey.

A coupling 110 is provided to convey the plurality of beads between components. A coupling may be an operative coupling. An operative coupling is effective to convey an element, such as a bead or plurality of beads between components (e.g., stations, cushioning pods). An operative coupling may be a fluid coupling. A fluid coupling may be a closed coupling (e.g., air tight). Examples of the couplings contemplated include, but are not limited to, a gravity powered channel extending between the storage station 102 and the weighing station 104. A gravity powered channel extending between the weighing station 104 and the metering station 106. A tubular structure extending between the metering station 106 and the filling station 108 that is gravity powered and air pressure (e.g., vacuum and/or positive pressure) powered, in an exemplary aspect. A fluid coupling is a coupling that facilitates the transfer of a plurality of beads from a first component to, or towards, a second component. In some aspects, a fluid coupling is a closed coupling that conveys the plurality of beads with assistance of a fluid, such as a pressure differential (e.g., positive pressure or negative pressure) created by the fluid. A pressure differential may be formed when a directed stream of pressurized fluid is inserted into the fluid coupling. The directed fluid stream is in a bead flow direction (i.e., direction of intended bead flow towards the cushioning pod) of the plurality of beads through the system. With the directed fluid stream, portions of the fluid coupling upstream from the fluid insertion nozzle may experience a reduced pressure relative to ambient conditions. The portion of the fluid coupling downstream from the fluid insertion nozzle may experience an increased pressure relative to ambient conditions. Therefore, a closed fluid coupling can provide both a pull (e.g., vacuum) conveyance on the plurality of beads upstream from the fluid insertion and a push (e.g., blowing) conveyance on the plurality of beads downstream. A coupling that is an operative couple may also be a fluid coupling if the operative coupling can support a pressure differential. As will be discussed in greater detail hereinafter, in some aspects, a terminal end (e.g., a bead nozzle and/or cushioning pod) must allow for an equalization of pressure to ambient conditions to ensure the pressure differential is realized within the fluid coupling. When the pressure differential is realized in the fluid coupling, the fluid stream is capable of conveying a plurality of beads therein. Having a cushioning pod formed, at least in part, with an air permeable material allows for the equalization of pressure in the cushioning pod to the ambient conditions. Stated differently, an air permeable material is a material that allows for the equalization of air pressure in a cushioning pod, such as by a allowing a fluid (e.g., air) that served as a vehicle to transport a plurality of beads to escape from a pod containing the beads.

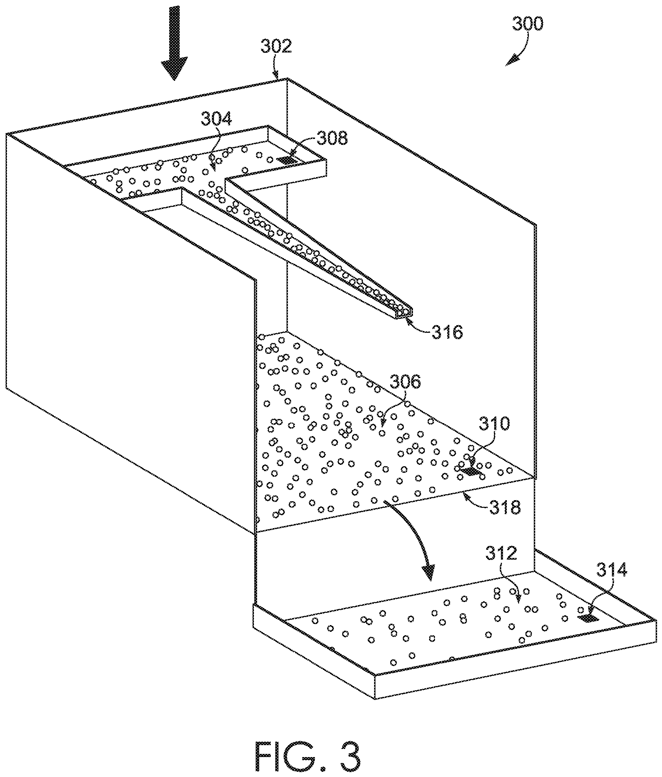

The weighing station 104 is a station configured to weigh the plurality of beads to achieve a target weight. For example, the weighing station is effective to measure out a specified mass of the plurality of beads to within a defined tolerance. The tolerance may be to within 2 grams, to within 1 gram, to within 0.5 grams, to within 0.1 gram, or the like. The weighing station 104 is configured to weight the plurality of beads to a weight such as 50 grams, 40 grams, 30 grams, 25 grams, 20 grams, 15 grams, 10 grams, 5 grams, 1 gram, and/or any value there between. An exemplary cushioning pod, such as a cushioning pod 120 having a plurality of discrete pods 122, 124, 130, and 132 each having different amounts of the plurality of beads contained therein. For example, the pod 122 may have 20 grams of a first plurality of beads 126, the pod 124 may have 15 grams of a second plurality of beads 128, the pod 130 may have 10 grams of beads, and the pod 132 may have 5 grams of beads when the beads are a foamed TPU having a diameter in a range of 3-4 mm. The weighing station will be discussed in greater detail in connection with FIG. 3 hereinafter.

According to the claimed invention, the weighing station 104 is effective to apply a variable rate weighing. A variable rate weighing allows for an initial macro weighing, followed by a micro weighing, followed by precision weighing to occur from a single device. In use, it is contemplated that a relatively high flow rate of beads are weighed for a first percentage of a target weight, such as for a first 80-90% of the target weight. A mid-level flow rate may then be applied that has a lower flow rate of beads than the high flow rate. This mid-level flow rate may be used to achieve up to about 90-98% of the target weight. Finally, in this example, a precise flow rate that is even less than the mid-level flow rate may be used until the target weight is achieved by the weighing station 104. Through adjustment of a flow rate through the weighing station 104, more control and granularity is achieved when weighing beads. For example, the lower the flow rate, the more precision is generally achieved for the weighing to a specific target. The variable flow rate, the rate at which beads are weighed, balances cycle time goals with precision by achieving a high through put for the first portion of a target weight and then a lower flow rate to achieve the target weight with greater precision. Alternative variable rate weighing is contemplated, such as a high and a low flow rate exclusively as opposed to the three or more rates discussed above.

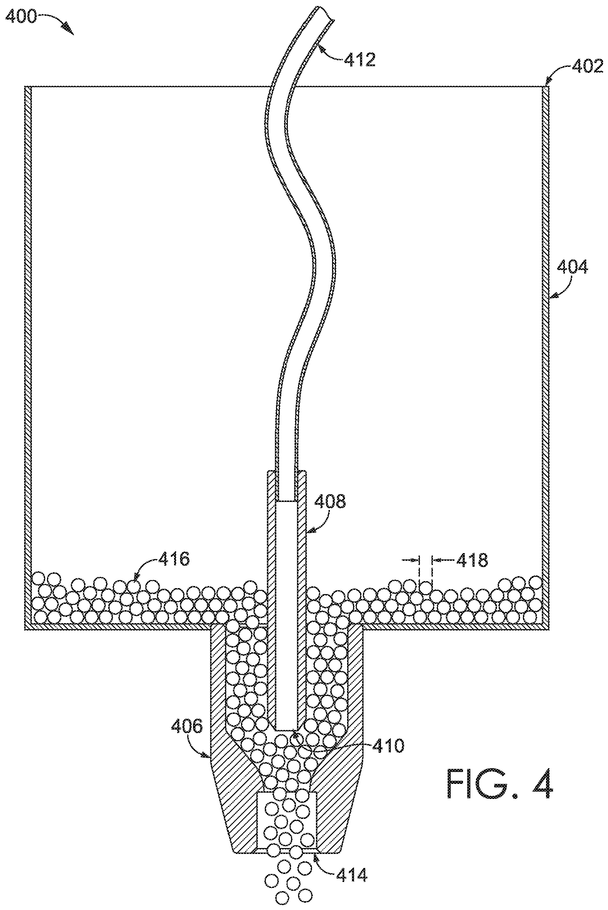

The metering station 106 is a station configured to provide or otherwise release the plurality of beads in a controlled and/or regulated manner. Metering of the plurality of beads prevents clogs and obstructions from forming in the conveyance of the plurality of beads. The metering may be accomplished using a variety of techniques. For example, the metering of the plurality of beads may be accomplished through use of a vibratory surface that advances beads along a surface having a vibration frequency that causes a controlled movement of the beads along the surface. In an alternative aspect, as will be discussed in greater detail at FIGs. 4-8 hereinafter, a fluid-powered funnel may be leveraged. The fluid-powered funnel uses a directed airstream through a funnel structure to restrict the flow of the plurality of beads while advancing a portion of the plurality of beads that can pass through the funnel with the assistance of the air stream to agitate and propel the plurality of beads in a bead flow direction. The metering of the plurality of beads by the metering station 106 is effective to convey the beads through the system 100 while minimizing bead conveyance disruptions downstream from clogs or other blockages formed by the plurality of beads.

The filling station 108 is comprised of a plurality of fluid couplings, such as a first hose 112 and a second hose 116. The fluid couplings are effective to direct the plurality of beads to specific cushioning pods or portions of the cushioning pod. The filling station 108 may comprise one or more valves, as will be discussed in connection with FIG. 2, to direct the plurality of beads to intended cushioning pods while maximizing use of the stations in the overall system. The first hose 112 and the second hose 116 may be a flexible tubular structure through which the plurality of beads may be conveyed.

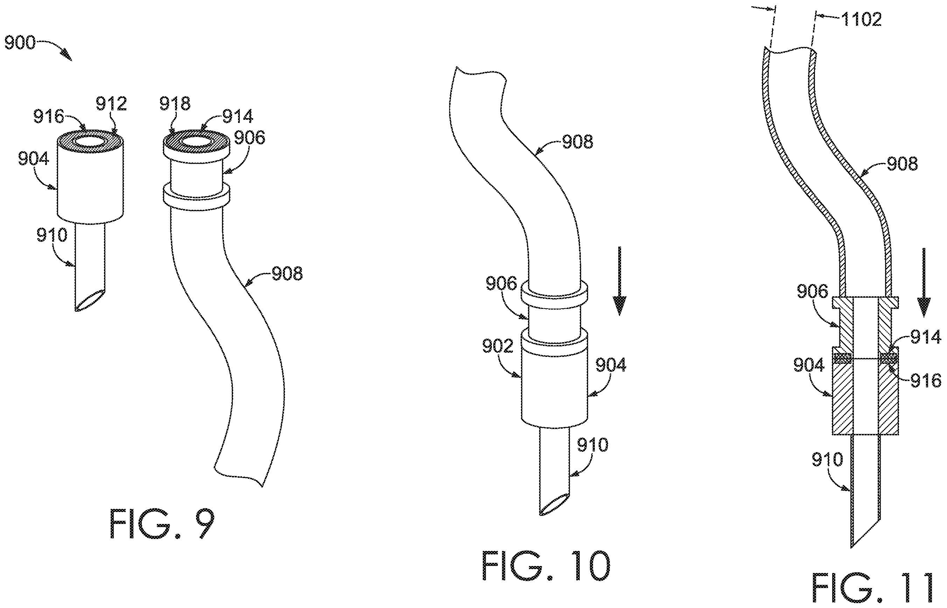

The filling station 108 is also comprised of bead nozzles, such as a first bead nozzle 114 and a second bead nozzle 118. A bead nozzle is a structure effective to transition the plurality of beads from the system 100 to the cushioning pod. As will be provided in greater detail in connection with FIGs. 9-11, the bead nozzle is comprised of a first portion and a second portion. The first portion interfaces with, such as inserts into, the cushioning pod. The second portion is joined with the fluid coupling, such as the first hose 112. The first portion and the second portion are removably joined such that the first portion can be engaged with the cushioning pod prior to the cushioning pod being introduced to the system 100. Once the cushioning pod having the first portion of the bead nozzle is introduced to the system 100, the first portion and the second portion of the bead nozzle may be joined, such as through magnetic attraction, to complete a fluid coupling of the system 100 into the cushioning pod cavity.

The input device 140 is optionally provided. The input device 140 may be any input device effective to provide information to the computing device 142 or the system 100 in general through a logical coupling 141 that is a wired or wireless connection that facilitates the transfer of data between the input device 140 and one or more components. Examples of exemplary input devices include, but are not limited to, bar code scanners, vision systems, keyboards, cursor manipulators (e.g., computer mouse), radio-frequency identification readers, and the like. For example, it is contemplated that a specific filling protocol may be recalled or developed for a specific cushioning pod configuration. The protocol may be retrieved from computer storage through an input from the input device. For example, an identifier, such as a bar code or other identification, may be present on the cushioning pod to be filled. The input device 140 is used to input the identification, which causes a unique filling protocol to be load and performed by the system 100 on the cushioning pod. Use of unique filling protocols allows for custom filling of various cushioning pods with a common system.

The computing device 142 typically includes a variety of computer-readable media and a processor. Computer-readable media can be any available media that can be accessed by computing device 142 and includes both volatile and nonvolatile media, removable and non-removable media. By way of example, and not limitation, computer-readable media may comprise computer-storage media and communication media. Computer-storage media includes both volatile and nonvolatile, removable and non-removable media implemented in any method or technology for storage of information such as computer-readable instructions, data structures, program modules or other data.

Computer-storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory includes computer-storage media in the form of volatile and/or nonvolatile memory. The memory of the computing device 142 may be removable, nonremovable, or a combination thereof. Exemplary memory includes non-transitory, solid-state memory, hard drives, optical-disc drives, etc. Computing device 142 includes one or more processors that read data from various entities such as bus, memory, or I/O components. Presentation component(s) may be included that present data indication to a person or other device. Exemplary presentation components include a display device, speaker, printing component, vibrating component, etc. I/O ports of the computing device 142 allow computing device 142 to be logically coupled to other devices including I/O components, some of which may be built in. Illustrative I/O components include the input device 140. A logical coupling that allows for a logically coupled connection is a wired or wireless communication between two devices. Example of a logical coupling include, but are not limited to, near field electronic communication, WiFi, Bluetooth, infrared light, and the like. Examples of wired logical coupling include, but are not limited to, Ethernet, direct bus wiring, and the like. A logically coupled first device and second device are able to communicate data at least in one direction, if not between the two devices.

The computing device 142 is logically coupled by a logical coupling 143 to one or more features of the system 100. For example, the computing device 142 may be logically coupled in a wired and/or wireless manner to the storage station 102, the weighing station 104, the metering station 106, and/or the filling station 108. Additionally, while not depicted in FIG. 1, the logical coupling extends to other contemplated components, such as valves, fluid sources, nozzles, and the like. The logical coupling 143 is a wired and/or wireless connection that facilitates the transfer of data, as is known in the art.

The fluid source144 is an exemplary fluid source. As previously provided, the fluid is contemplated, in some aspects, as compressed air. The fluid may be from a storage tank and/or a compressor, in an exemplary aspect. The fluid from the fluid source 144 is fluidly coupled with the system 100 through a fluid coupling 145. The fluid coupling 145 is a sealed conduit for passing along the fluid to different elements of the system 100. In an exemplary aspect, a regulator controls a pressure of the fluid, such as at 8 bar, 7 bar, 6 bar, 5, bar, 4 bar, 3 bar, and/or 2 bar of pressure. A bar of pressure is defined as 100,000 Pascal ("Pa"). In yet another specific example, it is contemplated that the fluid insertion nozzle inserts pressurized air into a fluid coupling at a range of about 5 to7 bar. In yet an even more specific example, the fluid is inserted into a fluid coupling at about 6 bar. The pressure at which the air is inserted into a fluid coupling, as will be discussed in detail below, affects a speed and volume of bead conveyance through the fluid coupling. The provided pressure ranges are effective for the system and beads contemplated.

The fluid inserted into the system 100 is used to aid in the conveyance of the plurality of beads through the fluid coupling as well as to aid in the metering of the plurality of beads, in an exemplary aspect. Further, as will be discussed in greater detail hereinafter, the fluid is used to generate a vacuum and/or positive pressure environment to encourage the movement of the plurality of beads. In aspects, it is contemplated that both gravity and fluid may be used in combination to convey the plurality of beads through one or more portions of the system 100.

FIG. 1 is provided to illustrate exemplary components; however, it is contemplated that any combination of the components may be leveraged in accordance with aspects hereof. Further, it is contemplated that nay number of any of the components may be implemented in accordance with aspects hereof. Further yet, it is contemplated that any components of FIG. 1 may be omitted or optionally included in accordance with aspects hereof.

FIG. 2 depicts an expanded system 200 for filing a cushioning pod with a plurality of beads, in accordance with aspects hereof. The components of FIG. 2 relate to those previously discussed with respect to FIG. 1. While not all components of FIG. 1 (e.g., computing device 142) are depicted in FIG. 2, it is contemplated that those components may be included and incorporated in connection with the system 200 of FIG. 2. For example, as seen on the right side of FIG. 2, the storage station 102 is generically provided, the weighing station 104 is generically provided, the metering station 106 is generically provided, and the filling station 108 is generically provided.

Different from FIG. 1, the system 200 of FIG. 2 is configured to provide discrete bead streams for simultaneously filling a plurality of cushioning pods, such as a cushioning pod having a plurality of discrete pods. Each of the discrete bead streams can include different beads (e.g., different material compositions), different weights of beads, and/or different metering. As such, the various components (e.g., stations) forming the different streams are identified along the top with a first group 230, a second group 232, a third group 234, and a fourth group 236. Similarly, the filling station 108 is comprised of discrete stations to which the bead streams are directed. For example, a first station 258 and a second station 262 are depicted. The beads are directed between the two stations by a valve, such as a first valve 240 that will be discussed in greater detail hereinafter. Each of the different stations is depicted as having different substations, such as a left station 254 and a right station 256 for the first station 258. The beads are directed between the left station 254 and the right station 256 by a valve, such as a second valve 260, as will be discussed in greater detail hereinafter.

The first group 230 is comprised of a first storage station 202, a first weighing station 204, and a first metering station 206. The first storage station 202 is operatively coupled with a coupling 208 with the first weighing station 204. Operatively coupled allows for the conveyance of beads between the stations. The first weighing station 204 is operatively coupled with the first metering station 206 by a coupling 210. The first metering station 210 is operatively coupled (e.g., fluidly coupled) with the first valve 240 via a coupling 211. The first valve 240 is effective to direct the plurality of beads from the first group 230 towards the first station 258 via a coupling 223 or towards the second station 262 via a coupling 227.

The second group 232 is comprised of a second storage station 212 operatively coupled to a second weighing station 214 with a coupling 218. The second weighing station 214 is operatively coupled with a second metering station 216 with a coupling 220. The second metering station 216 is coupled with the first valve 240 via a coupling 221. The first valve 240 is effective to direct the plurality of beads from the second group 232 towards the first station 258 via a coupling 225 or towards the second station 262 via a coupling 229.

The first valve 240 is depicted as a 3-way valve having two alternative outputs, the first station 258 and the second station 262. However, it is contemplated that the first valve 240, or any valve herein, may instead be an X-way valve that can have any number of alternative outputs. The first valve 240 and any other valve provided herein may be electronically controlled (e.g., changed) and/or monitored. For example, the system 200 may logically couple the first valve 240 with a computing device to control the direction of a bead stream. Further, as will be discussed in greater detail hereinafter, the position of the first valve 240 as it directs the plurality of beads may be electronically determined. A determination of the first valve 240 position may be used by a computing device to control fluid flow, such as at a first fluid insertion nozzle 246, to limit fluid flow to those portions of the system to which the valve is not directing a bead flow, as will be discussed in greater detail hereinafter.

The first valve 240 is effective to maintain the plurality of beads from the first group 230 separate and distinct from the plurality of beads from the second group 232. As such, if a specific weight or quantity of beads are measured in the first group 230, that quantity or weight is maintained through the first valve 240 towards the filling station 108.

To further aid in the conveyance of the plurality of beads through the system 200, the first fluid insertion nozzle 246 is provided. A fluid insertion nozzle is a structure effective to insert a pressure differential, such as a positive pressure and/or negative pressure into a fluid coupling of the system. The fluid insertion nozzle may direct an air stream in a direction of bead flow such that in a fluid coupling a positive pressure is experienced downstream from the fluid insertion nozzle that pushes the beads in the bead flow direction and a negative pressure is experienced in an upstream direction from the fluid insertion nozzle causing a pulling of the beads through the fluid coupling.

In an exemplary aspect, a fluid insertion nozzle is a fluid junction in line with a fluid coupling conveying a plurality of beads. As such, when a positive air pressure is applied through the fluid insertion nozzle by a fluid source, such as a compressor 242, the plurality of beads being conveyed in the fluid coupling are encouraged to progress toward a filling station by the fluid injected into the system by the fluid insertion nozzle. As distinct couplings may be maintained for the different groups, such as the first group 230, each distinct coupling may have a separate fluid insertion nozzle. For example, the coupling 223 serving the first group 230 has the first fluid insertion nozzle 246 and the coupling 225 serving the second group 232 has a second fluid insertion nozzle 248. Each fluid insertion nozzle may provide a different pressure or volume of fluid. For example, if a first group is conveying a larger quantity of beads than a second group, the first group may operate at a higher fluid velocity, pressure, and/or volume than the second group to convey the different bead quantities in a closer to similar time, for example. Stated differently, it is contemplated that the fluid insertion nozzle may vary an amount, pressure, and/or velocity of fluid inserted into a coupling to adjust a bead conveyance speed.

The compressor 242 may be an air compressor. The compressor 242 may comprise one or more valves and/or regulators to control the distribution of a fluid to the system 200. For example, when the first valve 240 directed bead flow to the first station 258, the compressor 242 may stop providing fluid to the second station 262 as the second station is not conveying a plurality of beads to conserve energy consumption. The selective distribution of fluid may be controlled, at least in part, by a computing device and one or more valves, such as a manifold.

Each of the first station 258 and the second station 262 are depicted as having two sides. In an exemplary aspect with the manufacturing of cushioning pods forming a footwear sole component (e.g., midsole that attenuates impact force to a wearer of the footwear), a right shoe component and a left shoe component may be filled at a common station to complete a footwear pair. Therefore, in the example of the system 200, a left cushioning pod for a left shoe may be filled with beads at the left station 254 and a right cushioning pod for a right shoe may be filled with beads at the right station 256. In this example, the direction of beads between the left station 254 and the right station 256 is controlled by the second valve 260. The second valve 260 may be electronically controlled by a computing device to coordinate the distribution of the plurality of beads. Switching the second valve 260 directs a plurality of beads from the first group 230 between a coupling 231 and a first bead nozzle 250 on the left side 254 and a coupling 235 on the right side 256. Similarly, the second valve 260 directs a plurality of beads from the second group 232 between a coupling 233 and a second bead nozzle 252 on the left side 254 and a coupling 237 on the right side 256. Depending on the number of separate and distinct groups, the second valve 260 (or any valve of system 200) is effective to direct the flow and distribution of beads to appropriate couplings to maintain the bead stream separate and distinct.

The second station 262, while not discussed in detail herein, operates similar to that which was discussed in connection with the first station 258. Utilization of valves, such as the first valve 240 allows for a more efficient use of the system 200 to allow near continuous filling of cushioning pods while preparing other cushioning pods to be filled on alternative sides or stations. For example, as a first pair of footwear cushioning components are being filled by the system 200 on the first station 258, a second pair of footwear cushioning components are being prepared (e.g., insertion of bead nozzles, joining of bead nozzle portions) at the second station 262.

FIG. 2 is provided to illustrate exemplary components; however, it is contemplated that any combination of the components may be leveraged in accordance with aspects hereof. Further, it is contemplated that nay number of any of the components may be implemented in accordance with aspects hereof. Further yet, it is contemplated that any components of FIG. 2 may be omitted or optionally included in accordance with aspects hereof.

FIG. 3 depicts an exemplary weighing station 300, in accordance with aspects hereof. Weighing of beads contemplated, such as a TPE foamed bead having a diameter in a 3-4 mm range at the volume contemplated (e.g., 50 grams, 40 grams, 30 grams, 20 grams, 15 grams, 10 grams, 5 grams) benefits from a level of precision of the provided example. In an aspect, the weighing station 300 relies, in part, on a gravitation movement of a plurality of beads and vibrational energy. Vibrational energy is generated by a vibration generator, such as a first vibration generator 310 and a second vibration generator 308. In an example, the vibration is generated by a vibration generator though an off-balanced rotation of a component. For example, an electric motor may have an unbalanced element attached to a rotational output shaft. As the rotational shaft rotates the unbalanced element, an oscillation is generated in coordination with the rate of rotation of the shaft. As the rotational shaft increases in rotational velocity, the frequency of the generated vibration also increases. Similarly, as a rotational speed decreases, the frequency of the generated vibration also decreases. Therefore, depending on a targeted rate of bead movement across a surface affected by a vibration generator, the vibration frequency may be adjusted to control the bead movement rate.

The weighing station 300 also includes a load sensor 314. The load sensor is capable of measuring a weight of beads contained in a defined space, such as a weighing surface 312. The load sensor 314 detects the weight of the beads as they fall from a movement portion 302 at a first surface edge 318 and/or from a second surface 304 as the beads fall from a second surface edge 316, in an exemplary aspect. As the beads accumulate on the weighing surface 312, the load sensor determines a cumulative weight of the accumulated beads thereon.

In an exemplary use of the weighing station 300, a plurality of beads are fed into a movement portion 302 from the bead source, such as through a hopper, channel, or other coupling directing the plurality of beads from the source to the weighing station 300. The accumulated beads are moved along the movement portion 302 by vibrational energy generated by a vibration generator. The vibrational energy may be adjusted, such as by a computing device, to increase the flow of the plurality of beads from the movement portion 302 on to the weighing surface 312. Vibrational energy is effective to move beads along a surface as a result of a reduction in static friction from a variable contact between the beads and the surface as a result of the vibration of the surface.

The second surface 304 is optional. In aspects where a greater degree of control (e.g., micro level of control) for movement of beads to the weighing surface is targeted, the second surface 304 and the second vibration generator 308 that is independently controlled from other vibration generators serve as a fine-tuned movement mechanism that provides a greater level of control for the amount of beads applied to the weighing surface 312 as compared to the first surface 306. The greater level of control results from a smaller surface area of the second surface 304 capable of conveying the plurality of beads to the weighing surface 312 as compared to the first surface 306. In some aspect, the second surface 304 is omitted. In other examples, the second surface 304 is not used or exposed to indirect vibrational energy generation.

In some aspects, as the load sensor detects a target weight is being approached, the weighing station 300 may adjust a movement rate of the plurality of beads. For example, the first vibration generator 310 may adjust a frequency from a first frequency that causes a faster travel of beads across the first surface 306 to a second frequency that causes a slower travel of beads across the first surface 306. Similarly, in examples where the second surface 304 is used, it is contemplated that the first vibration generator 310 may reduce or stop vibration generation at the first surface 306 while the finals bead accumulation results from the second surface 304 and the second vibration generator 308. While not depicted, it is contemplated that the weighing station includes an opening, slot, channel or other structure to accumulate the weighed beads to direct the weighed beads to a coupling for transport to a subsequent station, such as a metering station.

FIG. 4 depicts an exemplary metering station 400, in accordance with aspects hereof. The metering station 400 includes a reservoir 402 having an enclosure 404 holding a pre-weighed quantity of beads, such as from the weighing station of FIG. 3. The metering station 400 also includes a fluid-powered funnel 406. The fluid-powered funnel 406 is comprised of a fluid channel 408 fluidly coupled via a coupling 412 with a fluid source, such as an air compressor. The fluid may be air. The fluid may be air at a pressure greater than atmospheric pressure. The fluid is expelled from the fluid channel 408 at a fluid port 410.

In use, the metering station 400 receives a plurality of beads 416 that are contained within the reservoir 402 to be metered out at a controlled rate from an output port 414. The fluid-powered funnel 406 has a funnel-like shape leading up to the output port 414 that intentionally restricts the free-flow movement of the plurality of beads 416 there through. The size of the funnel is determined, in part by an average diameter 418 of the plurality of beads 416. The size of the funnel is selected to allow for the movement of the plurality of beads 416 when agitated or otherwise encouraged by fluid output from the fluid port 410. Because interference between the plurality of beads 416 occurs at the funnel after the fluid port 410 in a bead flow direction, the interference regulates the flow of the plurality of beads 416 through the funnel portion of the fluid-powered funnel 406. In an exemplary aspect, the output port 414 has a diameter in a range of 10 mm to 14 mm for exemplary beads contemplated. This diameter is greater than a restriction portion that is positioned between the fluid port 410 and the output port 414. As depicted, this restriction port may have a diameter that is 5%, 10%, 15%, 20%, 25%, 30%, 40%, 50% or any size there between of the diameter of the output port 414. Stated differently, the smallest constriction in the bead flow path of the metering station 400 may be 6 mm, 7 mm, 8 mm, 9 mm, 10 mm, 11 mm, 12 mm, 13 mm, or any size there between for the sizes of beads contemplated in exemplary aspects herein.

The fluid expelled from the fluid port 410 may be air having varied pressure and/or velocity to adjust a metering rate of the beads. For example, if a smaller diameter bead is provided to the reservoir 402, a lower pressure or velocity of fluid may be expelled from the fluid port 410 to maintain a metered outflow of beads that does not clog or otherwise interfere with the conveyance of the beads through the system. Similarly, for larger diameter beads, the velocity and/or pressure of the fluid expelled from the fluid port 410 may be increased to encourage the beads through the funnel portion of the fluid-powered funnel 406.

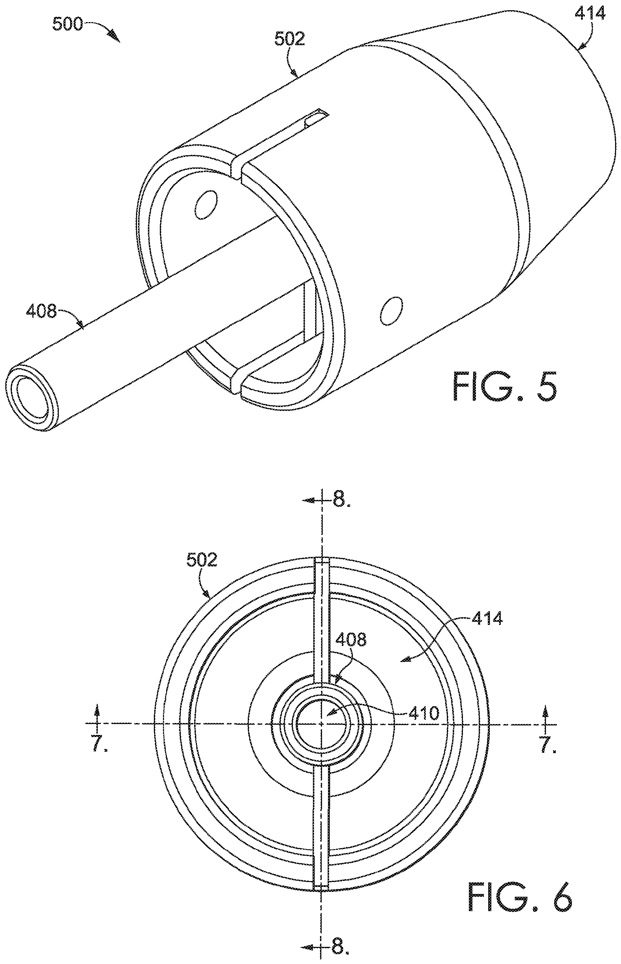

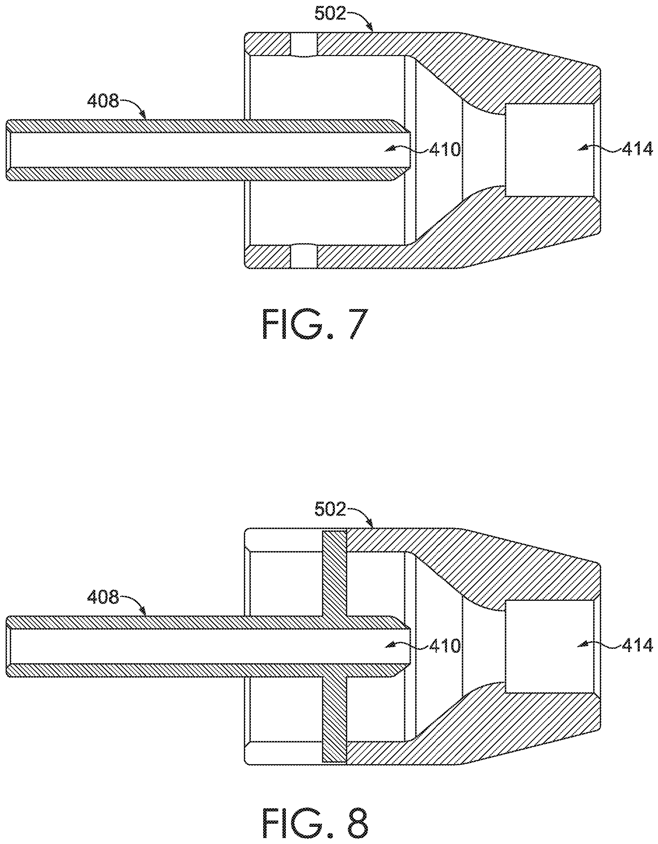

FIGs. 5-8 provide exemplary view of a fluid-powered funnel 500 removed from the metering station, in accordance with aspects hereof. FIG. 5 depicts an isometric projection of the fluid-powered funnel 500, in accordance with aspects hereof. The fluid-powered funnel 500 is comprised of the fluid channel 408, a main body portion 502 that terminates into the funnel portion and then the output port 414 in a bead flow direction. FIG. 6 depicts a top perspective of the fluid-powered funnel 500, in accordance with aspects hereof. FIG. 7 depicts a cross sectional view along the cutline 7-7 of FIG. 6, in accordance with aspects hereof. FIG. 8 depicts a cross sectional view along the cutline 8-8 of FIG. 6, in accordance with aspects hereof.

FIGs. 9-11 depicts a bead nozzle 900, in accordance with aspects hereof. FIG. 9 depicts the bead nozzle 900 in a decoupled configuration, in accordance with aspects hereof. As previously discussed, a bead nozzle is effective to introduce a plurality of beads into a cushioning pod. For efficient filling, the bead nozzle may be formed as two portions. A first portion 904 includes an injection portion 910. The injection portion 910 may be a rigid element effective to be inserted into a receiving channel of a pod to access an interior volume of the pod. The injection portion may have varied lengths extending to a distal end at which the beads are expelled. The varied length may depend on the pod and/or pod shape to be filled with beads. The first portion 904 may be inserted into the pod prior to the pod being introduced to a filling system to increase efficiency by reducing cycle time at the system. The first portion 904 may include a coupling element, such as a first magnetic element 916 at a coupling surface 912. A magnetic element may either be a magnetic material and/or a material attracted to magnetic forced (e.g., ferrous material). Alternative coupling elements contemplated include, but are not limited to, mechanical clasps, hook-and-loop elements, compression fittings, and the like.

The bead nozzle is also comprised of a second portion 906. The second portion 906 is coupled with a coupling 908. The coupling 908 may extend from the filling station, a valve, or other portion of a filling system. The second portion 906 is comprised of a coupling element, such as a second magnetic element 918 at a coupling surface 914. The second magnetic element 918 is a complementary magnetic element to the first magnetic element 916 to facilitate a magnetic attraction and removable coupling. A removable coupling is a joining of discrete elements in a manner that is maintained but can be disjoined, such as by overcoming a magnetic attraction that maintains the portions in contact.

FIG. 10 depicts the bead nozzle 900 in a coupled arrangement 902, in accordance with aspects hereof. FIG. 11 depicts a cross section of FIG. 10, in accordance with aspects hereof. FIG. 11 illustrates the coupling surface 912 and the coupling surface 914 in contact with the second magnetic element 918 and the first magnetic element 916 forming a removable coupling of the first portion 904 and the second portion 906. Additionally, a diameter 1102 of the coupling 908 is depicted as an exemplary diameter. The diameter of the coupling used in the system may be adjusted based on a variety of factors, such as an average diameter size of beads to be conveyed there through. The diameter 1102 is greater than the largest expected bead diameter. Additionally, the diameter may be a multiple of the diameter of the largest expected bead diameter. The multiple may be two, three, or four times the diameter of the bead, in an exemplary aspect. Further, in aspects contemplated, different portions of the bead nozzle 900 may have different diameters to aid in bead delivery. For example, the coupling 908 may have a first diameter, such as 12-18 mm. The first portion 904 and the second portion 906 have a diameter of 8-12 mm in an exemplary aspect. The injection portion 910 has a diameter of 6-10 mm, in an exemplary aspect. Further yet, it is contemplated that in a bead flow direction, the diameter either is consistent with a previous portion or it reduces, in exemplary aspects hereof. Further yet, it is contemplated that one or more portions may have a variable diameter. For example, the injection portion 910 may have a tapered profile such that the diameter changes from a larger to a smaller diameter in a bead-flow direction. Further yet, the internal diameter through which the plurality of beads pass may remain constant while an external sizing (e.g., diameter) may reduce in a bead flow direction to ease insertion of the nozzle 900 into a bead pod.

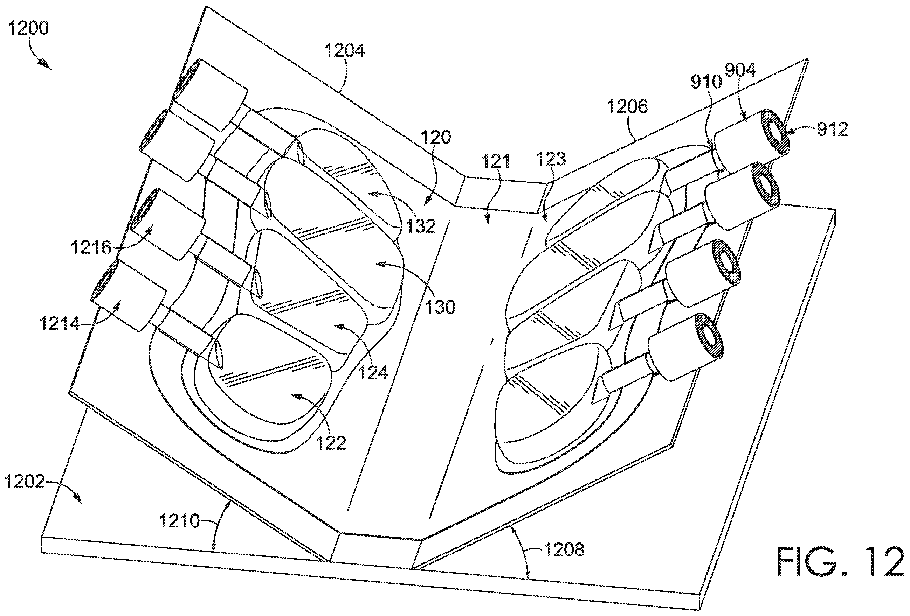

FIG. 12 depicts an assembly 1200 comprised of a filling fixture 1202 maintaining a cushioning pod assembly 121 having the cushioning pod 120 of FIG. 1 and a second cushioning pod group 123, in accordance with aspects hereof. The filling fixture 1202 provides a cradle for supporting the cushioning pod assembly 121 during a filling operation. The filling fixture 1202 is comprised of a first wing 1204 and a second wing 1206. The first wing 1204 is angled at an angle 1210 and the second wing 1206 is angled at an angle 1208. The angles of the wings from a horizontal position aid in the filling of the cushioning pod assembly 121. The angle allows for the bead nozzle portions, such as a bead nozzle portion 1214 and a bead nozzle portion 1216 to be positioned vertically above a low point of the pod to be filled. By having the elevation change from a location of the bead nozzle to a low point of the pod, as beads are inserted into the pod through the bead nozzle, the pod can fill from the low point towards the bead nozzle to get a complete fill. Stated differently, by positioning the bead nozzle above an opposite portion of a pod, the beads accumulate first at the opposite portion of the pod allowing for flow of the beads out of the bead nozzle. The filling fixture 1202 also provides support to one or more bead nozzles as they are inserted into the cushioning pod assembly 121. This support prevents the bead nozzles from folding, crimping, or otherwise blocking access into the pod due to their own mass. Further, the filling fixture 1202 allows for preassembly of the cushioning pod assembly 121 with the plurality of bead nozzles (e.g., joining of bead nozzle first portions with pods) before introducing the assembly 1200 to the filling system, which can increase throughput of the system. The filling fixture 1202 also allows for a smaller footprint in the filling station of the system due to the angle of the wing portions, in an exemplary aspect.

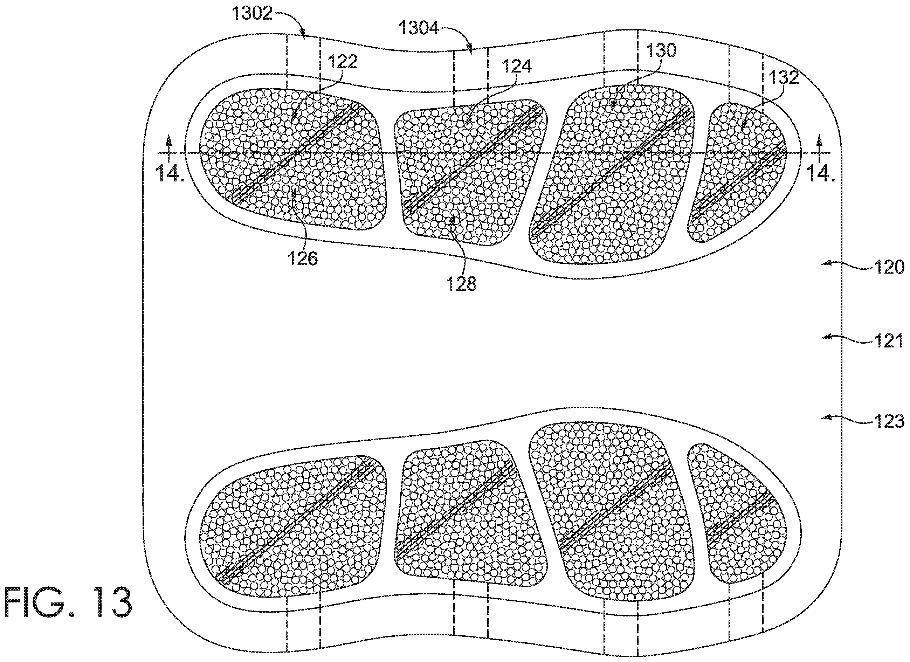

FIG. 13 depicts the cushioning pod assembly 121 after being filled, in accordance with aspects hereof. Each of the discrete pods 122, 124, 130, and 132 are filled with discrete volumes of beads, as previously discussed. The beads are introduced into the discrete pods by a bead nozzle, as depicted in FIG. 12, previously. The bead nozzles enter the pods through an insertion port, such as a first insertion port 1302 and a second insertion port 1304. As depicted in FIG. 12, the bead nozzle portion 1214 extends through the first insertion port 1302 f FIG. 13 to deposit the plurality of beads 126 therein. Similarly, as depicted in FIG. 12, the bead nozzle portion 1216 extends through the second insertion port 1304 to deposit the plurality of beads 128 therein. In some aspects it is contemplated that the insertion ports are elastomeric in nature and self-seal following the extraction of the bead nozzle. In alternative aspects the insertion ports are sealed after the extraction of the bead nozzle, such as through ultrasonic welding, heat welding, stitching, adhesive, and the like. Further, it is contemplated that as a grouping of pods are extracted from the cushioning pod assembly 121, the extraction process seals the insertion ports. For example, if the cushioning pod 120 is removed from the cushioning pod assembly 121 through a laser or other thermal-based removal technique, the removal operation (e.g., cutting) seals the insertion port.

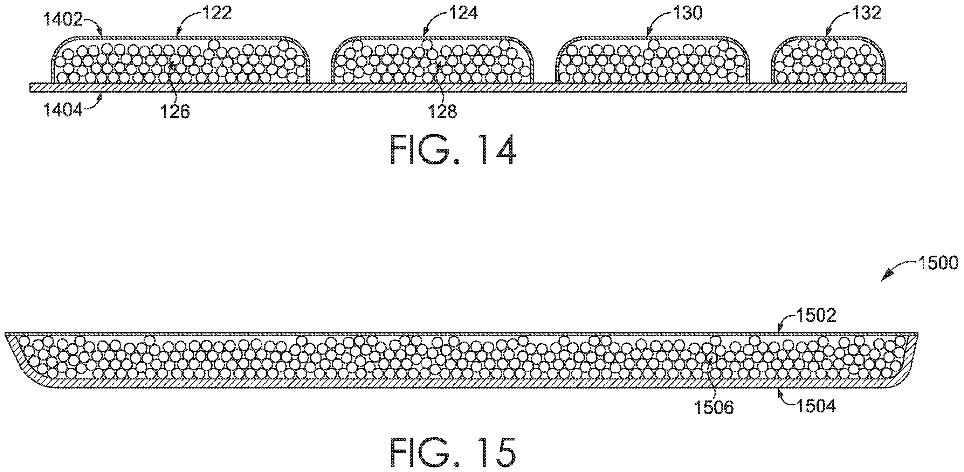

FIG. 14 depicts a cross section of the cushioning pod assembly 121 along a cutline 14-14 of FIG. 13, in accordance with aspects hereof. A first material 1402 and a second material 1404 forms the cushioning pod assembly 121. In an exemplary aspect, the first material is a film material, such as a polymeric composition formed as a sheet-like film. The first material 1402 may be formed from any material, such as a TPE. The first material 1402 is an air impermeable material, in an exemplary aspect. The first material 1402 is a conforming and flexible material. The second material 1404 is an air permeable material, in an exemplary aspect. Stated differently, the second material 1404 has greater air permeability than the first material 1402, as will be discussed hereinafter. The second material 1404 may be formed from any material composition, such as a polymeric composition. The second material 1404 is a textile, in an exemplary aspect. A textile is a woven, knit, braided, or non-woven material formed from a mechanical engagement of one or more material strands (e.g., filaments, threads, yarn). The mechanical engagement provides a level of porosity that facilitates air permeability, in an exemplary aspect.

Relative air permeability of the first material 1402 and the second material 1404 is relevant to the filling of the beads into the pod. Specifically, aspect contemplate use of a fluid to assist in the conveyance of the beads through one or more portions of the system, such as the filling station. As a result, the fluid that is assisting in the transport of the beads through the system is also deposited into the pod. Without sufficient air permeability at the pod, the expelled fluid could fill and potentially distort the pod during a filling operation. Further, without sufficient air permeability at the pod, a pressure differential relative to ambient conditions may not be generated by the fluid insertion nozzles to effective assist in conveying the plurality of beads in a bead flow direction.

The second material 1404 when used in an article of footwear component forms a foot-facing surface, in an exemplary aspect. The second material 1404 may be a highly conforming material such that as a wearer places a load on the second material 1404, the second material 1404 conforms to the wearer's foot and transfers the load to the plurality of beads contained in the pod. As such, the independent and discrete beads forming the plurality of beads also conform to the wearer's foot to provide a supportive and effective cushioning system for an article of footwear. The second material 1404, in an exemplary aspect, is a polyurethane textile that has a relative high elasticity and breathability that adapts to a wearer's body as a load is applied into the plurality of beads.

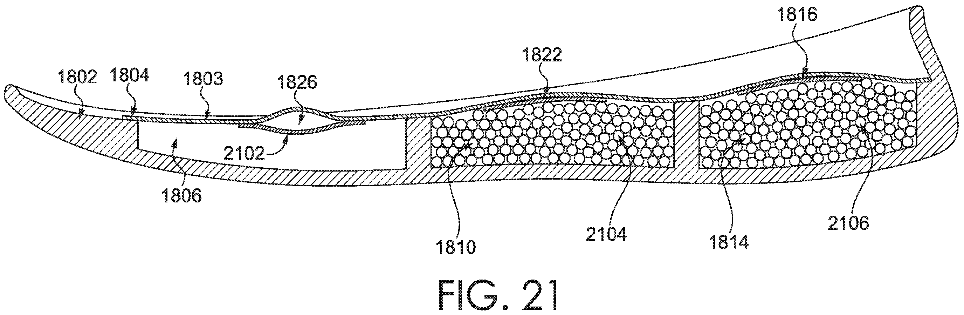

While four discrete pods are depicted in the examples provided herein, it is understood that the pods may be of any number and configuration. For example, a single pod may form the cushioning pod structure. Multiple pods may form the cushioning pod structure. Further, while a planar structure is depicted in relation to the second material 1404, it is contemplated, as depicted in FIG. 21 hereinafter, that a non-planar structure may be formed, such as through "over filling" of the one or more pods. The non-planar cross section, in an exemplary aspect, increases a foot-contacting surface and allows the pods filled with beads to conform to a great portion of a wearer's foot than when the pods are filled to a planar level when under a compressive force provided by the wearer or the ground.

FIG. 15 depicts an alternative cushioning pod 1500 concept, in accordance with a aspects hereof. The cushioning pod 1500 represents a cross section of a cup sole 1504 filled with a plurality of beads 1506 and contained with a top cloth 1502. The top cloth 1502, in an exemplary aspect, has characteristics similar to those of the second material 1404 of FIG. 14. For example, the top cloth 1502 has a greater air permeability than the cup sole 1504 to allow for the equalization of pressure in the pod cavity as beads are inserted under fluid pressure. While a single pod is depicted in FIG. 15, it is contemplated that a plurality of pods may be formed to provide discrete and controlled pods having different or similar characteristics, as discussed in connection with other aspects herein. An insertion port may extend through the top cloth 1502, in an exemplary aspect, to facilitate the insertion of the plurality of beads 1506 therein.

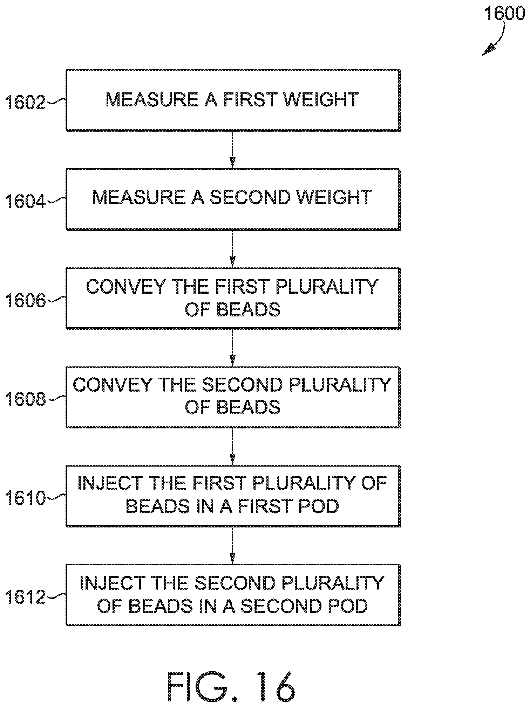

FIG. 16 depicts a flow chart representing a method 1600 for filling a cushioning pod, in accordance with aspects hereof. At a block 1602 a first measuring station measures a first weight of a plurality of beads. For example, with reference to FIG. 2, the first weighing station 204 may weigh a first weight of a plurality of bead according to a recipe for a given cushioning pod. Contemporaneously, at a block 1604, a second measuring station weighs a second weight of the plurality of beads. For example, with reference to FIG. 2, the second weighing station 214 may weigh a second weight of the plurality of bead according to the recipe for the cushioning pod.

At a block 1606, the first plurality of beads are conveyed through a first valve to a first filling station. With reference to FIG. 2, the first plurality of beads are conveyed from the first weighing station 204 through the first valve 240 to the first station 258. The first valve 240, or any valve herein, may be pneumatically operated to change between valve positions. Additionally, or alternatively, an electrically-driven actuation of the valve may cause a change between valve positions. At a block 1608, the second plurality of beads is conveyed through the first valve to the first filling station. With reference to FIG. 1, the second plurality of beads is conveyed from the second weighing station 214 through the first valve 240 to the first station 258. It is understood that the conveyance of the beads may include conveyance through additional stations, such as a metering station. The conveyance may be achieved through a vacuum pressure, positive pressure, gravity feed, mechanical movement, and/or the like.

At a block 1610, the first plurality of beads is injected into a first pod. For example, with reference to FIG. 2, the first plurality of beads is conveyed through the coupling 231 to the first bead nozzle 250, which interfaces with the first pod to inject the first plurality of beads therein. At a block 1612, the second plurality of beads is injected into a second pod. The first pod and the second pod are discrete pods of a common article. With reference to FIG. 2, the second plurality of beads is conveyed through the coupling 233 to the second bead nozzle 252, which interfaces with the second pod to inject the second plurality of beads therein.

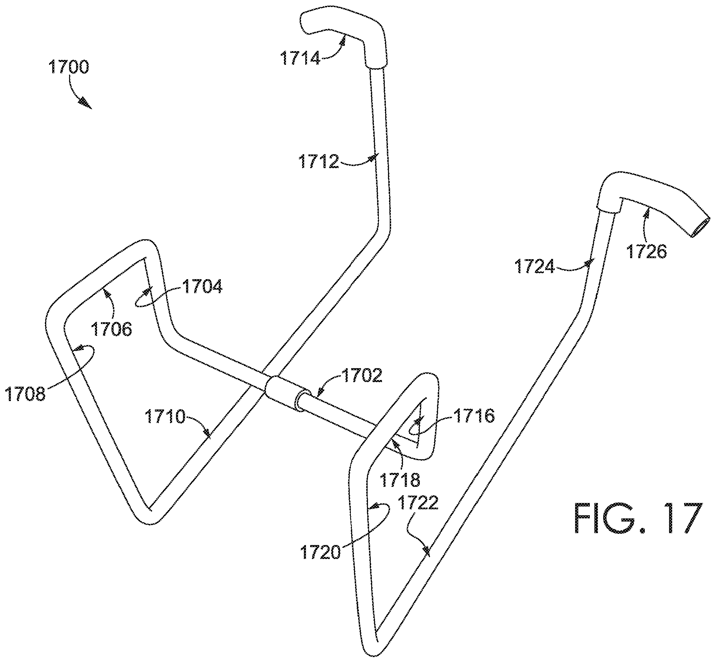

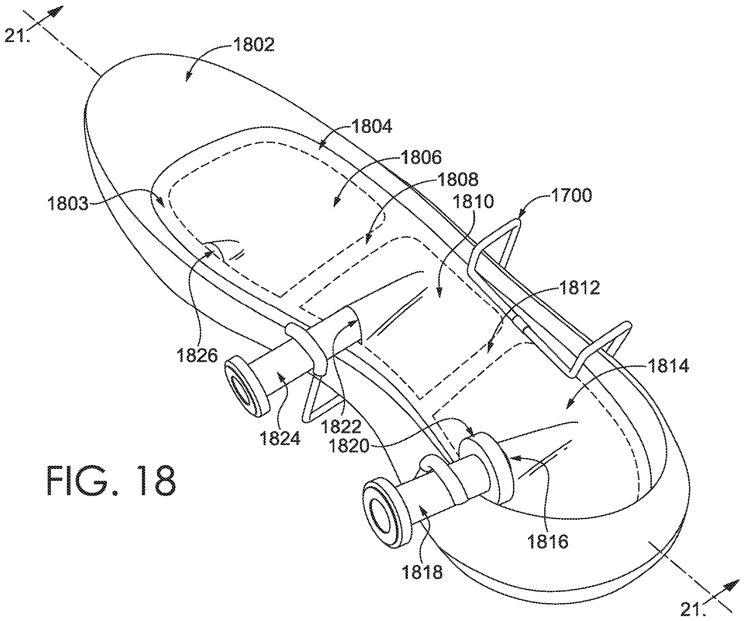

FIG. 17 depicts an exemplary fixture 1700, in accordance with aspects hereof. The fixture 1700 positions one or more bead nozzles for filling one or more pods with a plurality of beads, as depicted in FIG. 18, hereinafter. The fixture 1700 includes a cross member 1702 that transitions into a first internal vertical member 1704 that then transitions to a first top member 1706 that then transitions to a first external member 1708 that then transitions to a first underfoot portion 1710 that then transitions to a first nozzle vertical member 1712 that then terminates at a first nozzle hook member 1714. Returning to the cross member 1702 and extending in the opposite direction along the fixture 1700, the cross member 1702 transitions a second internal vertical member 1716 that then transitions to a second top member 1718 that then transitions to a second external member 1720 that then transitions to a second underfoot portion 1722 that then transitions to a second nozzle vertical member 1724 that then terminates at a second nozzle hook member 1726. While an exemplary configuration is depicted, alternative configurations for a fixture are contemplated.

The fixture 1700 mat be formed from any material. In an exemplary aspect, the fixture 1700 is formed from a metallic material, such as a steel or aluminum. However, additional materials are contemplated, such as polymer-based compositions. The fixture 1700 may be comprised of additional materials, such as materials having a relatively higher coefficient of frictions to stabilize and/or secure the fixture 1700 in connection with an article (or portion thereof) of footwear. For example, when the various members are principally formed from a metallic material, a polymeric material may cover or otherwise form an exterior surface on a portion of the fixture 1700 to increase securement of the fixture 1700 to a footwear portion. In the depicted example of FIG. 17, a material covers the first nozzle hook member 1714 and the second nozzle hook member 1726 to secure respective bead nozzles, as will be shown in FIG. 18 hereinafter. The covering at the hook members prevents a bead nozzle from being ejected, under its own insertion pressure, from a pod to which it is filling, in an exemplary aspect.

In yet another example of a fixture, it is contemplated that portions of the fixture may be adjustable to accommodate different articles (or portions) of footwear to make the fixture universal. For example, a vertical member that functions in a similar manner to the first nozzle vertical member 1712 and/or the second vertical member 1724 of FIG. 17 may instead be length adjustable. For example, it is contemplated that a common vertical member or a discrete vertical member for each hook member may be adjustable in length to accommodate different sizes, shapes, and configurations of footwear components. The adjustable nature is such that a selective engagement and disengagement of a length is achieved. For example, a ratchet-like assembly may allow for the shortening of length to create a compressive force on a nozzle maintained by the fixture. As the vertical length of the fixture portion is reduced, a greater force is applied to a nozzle first end such that the nozzle pivots on a portion of the fixture or the article of footwear component to cause an opposite second end of the nozzle to lift against a pod or material forming a top covering of a pod. As such, regardless of the footwear component configuration, an adjustable length vertical member of the fixture allows for an appropriate securement and positioning of a nozzle in relation to a pod or footwear component having a pod.

In a specific example of a universal fixture for securing and maintaining a nozzle in an article of footwear for filling a pod with particulate matter, it is contemplated that a single vertical member extends from an underfoot portion. The vertical member may be rotatably coupled with the underfoot portion to allow for positioning and compensation relative to an angle of the footwear component sidewall. The single vertical member at an opposite end of the underfoot portion include one or more nozzle hooks. For example, a cross member may extend from the vertical member at the end opposite from the underfoot portion. At each end of the cross member is a nozzle hook. The length of the cross member may also be adjustable to accommodate different spacing needs for different pods and/or nozzles. The cross member may be pivotally coupled with the vertical member to adjust for different vertical distances used for each nozzle and nozzle hook as the vertical member length is adjusted. A pivoting or rotational movement of the cross member allows for additional flexibility in the fixture to be universally applied to different articles. The adjustable nature of the fixture may leverage ratcheting mechanisms, friction locking mechanisms, mechanical locking mechanisms, and the like to adjust and then maintain a set length during use.

FIG. 18 depicts the fixture 1700 of FIG. 17 securing bead nozzles 1818, 1824 for filling a cushioning pod 1810, 1814 integral to a footwear sole component 1802, in accordance with aspects hereof. The footwear sole component 1802 is a shoe sole having a plurality of cushioning pods 1806, 1810, 1814 integrally formed therein and enclosed by a material 1804.

The material 1804 is an air-permeable material that is secured to the sole component 1802. The material 1804 may be adhered, welded, or otherwise joined with the sole component. In the aspect depicted, a perimeter is recessed into the sole component 1802 to provide a location for securing the material 1804 to the sole component 1802. The joining portion allows for the various pods 1806, 1810, 1814 to be covered with an integral selection of the material 1804 while remaining discrete pods. However, separate and distinct portions of a material may enclose the various pods. The joining portion includes an exterior perimeter 1803, a first dividing portion 1808, and a second dividing portion 1812. The material 1804 is secured to the sole component 1802 at each of the perimeter 1803, the first dividing portion 1808, and the second dividing portion 1812 to keep each of the pods 1806, 1810, and 1814 as separate and discrete pods.

The material 1804 may be any material. In an exemplary aspect, the material 1804 is a knit or woven material formed from a synthetic material, such as polyether-polyurethane copolymer. The material 1804 provides a level of air permeability such that as air carrying beads is inserted into the pods enclosed, at least in part, by the material 1804, a pressure within the pod may be equalized through a transfer of air through the material 1804. Further, the material 1804 is elastic in nature to aid in the conformance to a wearer's foot. For example, as the beads filling a pod are separate and discrete beads capable of re-orienting under pressure exerted by a wearer's foot, the material 1804 allows the beads to reposition and to additionally conform to the wearer's foot.

Each of the pods includes an insertion port. A first pod 1806 has a first insertion port 1826. A second pod 1810 has a second insertion port 1822. A third pod 1814 has a third insertion port 1816. The insertion port serves as a port through which a bead nozzle extends for injecting beads into the pod. In some aspects, the insertion port is an unsecured edge of the material 1804. In yet other aspects, the insertion port is an opening or void through the material 1804. In yet other examples, the insertion port is comprised of a valve material, as best seen in FIG. 21 hereinafter as valve material 2102. The valve material prevents or restricts the movement of beads from the pod interior to an exterior location. As will be discussed and illustrated in FIG. 21 hereinafter, the valve material causes the insertion port to serve as a one-way valve that allows for the insertion of beads, but limits the extraction of beads from a pod. This is accomplished in some aspect through the physical separation of the valve material from the material 1804 when the bead nozzle is inserted through an insertion port. Once the bead nozzle is removed from the insertion port, the valve material contacts the material 1804 to close the insertion port and prevent or restrict beads from exiting the pod. Elastomeric properties of the material 1804 and/or the valve material further facilitates the insertion of the bead nozzle, the sealing around the inserted bead nozzle, and then the sealing of the pod. For example, the material may stretch for the insertion and securement of the bead nozzle and then resiliently return to an un-stretched state to seal the pod and secure the inserted beads therein.

The fixture 1700, as depicted in FIG. 18, is configured to provide a securement of a first bead nozzle 1818 and a second bead nozzle 1824 in respective insertion ports. Specifically, the nozzle hook members interact with the bead nozzle to position and maintain the bead nozzle in a filling configuration. A filling configuration is a position where a distal end of the bead nozzle extends above or to a fill level of the pod. In some examples, if the distal end, such as an ejection end, of the bead nozzle is not positioned above the fill level, beads are prevented from exiting the fill nozzle as they impact or collide with beads within the pod. Therefore, when the bead nozzle is positioned at or above the fill level, a portion of the bead nozzle is free from interference to eject a desired quantity of beads. To achieve this filling configuration, the fixture 1700 resists a force applied by the elastic material 1804 at the insertion port. As depicted in FIG. 18, the fixture 1700 uses a part of the sole component 1802 as a fulcrum about which the bead nozzle is pivoted to raise the distal end of the bead nozzle in resistance to the material 1804. The nozzle hook member of the fixture 1700 therefore pulls on the bead nozzle to raise the opposite end of the bead nozzle within the pod. The raised distal end is therefore unobstructed by inserted beads towards the end of the fill process.

Further enhancements to the filling process and the structures supporting the filling process are contemplated. For example, instead of relying on the sole component 1802 exclusively or at all, as a fulcrum or supporting structure for the bead nozzle, a spacer 1820 may be used in connection with a bead nozzle. The spacer 1820 is positioned on the first bead nozzle 1818 and serves as a physical support of the first bead nozzle 1818 during a filling operation. In some examples, a part of the sole component 1802 may not provide sufficient physical support or is otherwise ineffective for the bead nozzle to be appropriately positioned during a filling operation. The sidewall of the sole component 1802 in a heel end may be flexible or otherwise ineffective to serve as a fulcrum to achieve a filling configuration for the first bead nozzle 1818. As a result, the fulcrum is formed from the spacer 1820 resting on a footbed portion of the sole component 1802, in an exemplary aspect. It is contemplated that alternative spacers may be used to achieve an appropriate fill configuration. Further, it is contemplated that a spacer may be omitted altogether. Further yet, it is contemplated that a fill configuration may not have a distal end of a bead nozzle raised above a fill level, in some aspects.

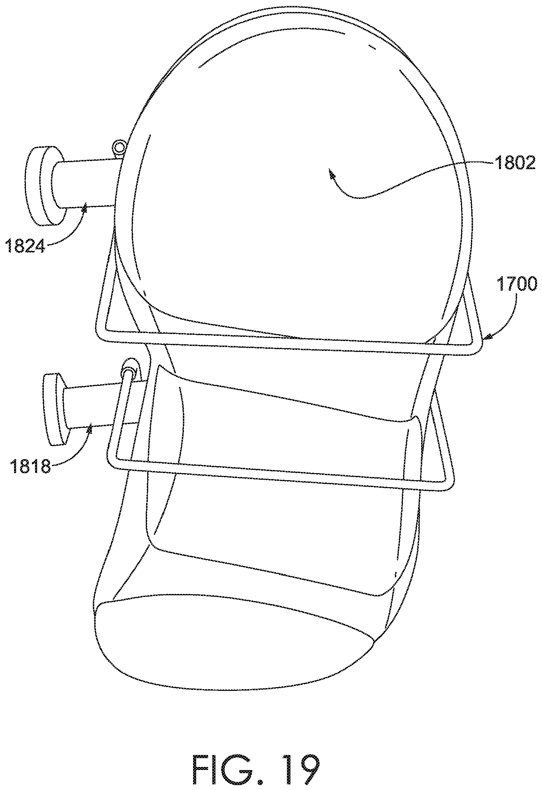

The fixture 1700 is depicted having the cross member (e.g., cross member 1702 of FIG. 17) engaging with the sole component 1802 on a first side, such as a lateral side of the sole component 1802. The fixture 1700 extends under the sole component 1802, as depicted in FIG. 19 hereinafter, to the opposite of the sole component 1802. At the opposite side, such as a medial side, the fixture 1700 extends upwardly to the nozzle hook portions that are sized and configured to engage a bead nozzle inserted in a pod of the sole component 1802.

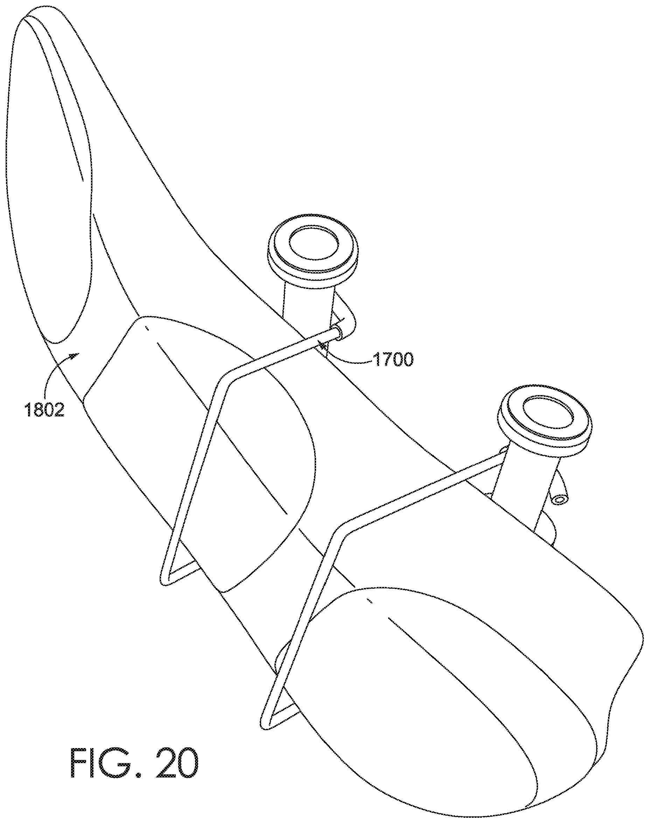

FIG. 19 depicts a ground-facing surface of the footwear sole component 1802 of FIG. 18, in accordance with aspects hereof. FIG. 20 depicts a bottom perspective of FIG. 19, in accordance with aspects hereof.

FIG. 21 depicts a cross sectional view of the footwear sole component 1802 of FIG. 18 subsequent to filling portions with a plurality of beads and with the fixture 1700 omitted, in accordance with aspects hereof. The cross section is taken along line 21-21 of FIG. 18. The first pod 1806, the second pod 1810, and the third pod 1814 are depicted. Further, the first pod 1806 illustrates a first valve material 2102 at the first insertion port 1826. The first valve material 2102 is able to separate from the material 1804 in order to allow for the insertion of a bead nozzle. Following the filling of a pod with beads, the valve material and the material 1804 converge to seal off the insertion port, which secures the beads within the pod. It is also contemplated that a pod may be filled above a portion of the sole component to form a bulging or over filled effect for that pod, as depicted in the second pod 1810 and the third pod 1814. The second pod 1810 is filled with a plurality of beads 2104 that extend above the sole component 1802 forming the second pod 1810. Similarly, a plurality of beads 2106 fill the third pod 1814 to an overfilled state such that the plurality of beads 2106 extend above the sole component 1802 forming the third pod 1814.

While FIG. 21 depicts the pods having various sizes, shapes, and positions; however, it is contemplated that the pods may have any size, shape, or position. Further, the sole portion is exemplary in nature and not limiting. Other sole portions are contemplated as are other pod configurations. Further, while the insertion ports are depicted in various locations relative to a pod, it is contemplated that the insertion ports may be in alternative locations and/or configurations.

## Claims

1. A system (100) for filling a cushioning pod with a plurality of beads, the system comprising:
a bead source (102) configured to hold a plurality of beads;
a filling station (108) operatively coupled with the bead source (102), the filling station (108) comprising:
(1) a fluid insertion nozzle (246) to introduce a fluid from a fluid source (144) into a fluid coupling (112) of the system (100), wherein the fluid coupling (112) is configured to transport the plurality of beads for at least a portion of the operative coupling from the bead source (102) to the cushioning pod; and
(2) a bead nozzle (118), the bead nozzle (118) coupled with the fluid coupling (112) of the system (100) and configured to interface with the cushioning pod to deposit the plurality of beads in the cushioning pod; and
a weighing station (104) operatively coupled between the bead source (102) and the filling station (108), the weighing station (104) being effective to apply a variable rate weighing, wherein the weighing station (108) comprises a vibration generator (308, 310), **characterized in that** the vibration generator (308, 310) is configured to selectively generate at least a first vibration level and a second vibration level.

2. The system (100) of claim 1, wherein the fluid insertion nozzle (246) introduces the fluid in a direction of bead flow from the bead source (102) toward the filling station (108).

3. The system (100) of claim 1, wherein the fluid insertion nozzle (246) selectively introduces the fluid.

4. The system (100) of claim 1, wherein the fluid is a gas.

5. The system (100) of claim 1, wherein the bead nozzle (118) is comprised of a first portion and a second portion, the first portion and the second portion are removably coupled.

6. The system (100) of claim 5, wherein at least one of the first portion or the second portion is comprised of a magnetic element, the magnetic element effective to removably couple the first portion with the second portion.

7. The system (100) of claim 1, wherein the weighing station (108) comprises a load sensor (314).

8. The system (100) of claim 1 further comprising a metering station (106) operatively coupled between the weighing station (104) and the filling station (108).

9. The system (100) of claim 8, wherein the metering station (106) is comprised of a fluid-powered funnel (406).

10. The system (100) of claim 9, wherein the fluid-powered funnel (406) is comprised of a fluid port (410) effective to expel a fluid in a bead-flow direction toward the filling station (108).

11. The system (100) of claim 1, wherein at least a portion of the cushioning pod is comprised of an air permeable material.

12. The system (100) of claim 1, wherein the plurality of beads have a diameter between 1 mm and 10 mm.

## Patentansprüche

1. Ein System (100) zum Füllen einer Polsterungskapsel (*cushioning pod*) mit einer Vielzahl von Kügelchen bzw. Perlen (beads), wobei das System Folgendes umfasst:
eine Perlenquelle (102), die zur Aufnahme einer Vielzahl von Perlen konfiguriert ist;
eine Füllstation (108), die funktional mit der Perlenquelle (102) gekoppelt ist, wobei die Füllstation (108) Folgendes umfasst:
(1) eine Fluideinführungsdüse (246) zum Einführen eines Fluids von einer Fluidquelle (144) in eine Fluidkupplung (112) des Systems (100), wobei die Fluidkupplung (112) dazu konfiguriert ist, die Vielzahl von Perlen zumindest über einen Teil der operativen Kupplung von der Perlenquelle (102) zur Polsterungskapsel zu transportieren; und
(2) eine Perlendüse (118), wobei die Perlendüse (118) mit der Fluidkupplung (112) des Systems (100) gekoppelt und so konfiguriert ist, dass sie eine Schnittstelle mit der Polsterungskapsel bildet, um die Vielzahl von Perlen in der Polsterungskapsel abzulegen; und
eine Abwiege- bzw. Wiegestation (104), die funktional zwischen der Perlenquelle (102) und der Füllstation (108) gekoppelt ist, wobei die Wiegestation (104) wirksam ist, um ein Wiegen mit variabler Rate anzuwenden, wobei die Wiegestation (108) einen Vibrationsgenerator (308, 310) umfasst,
**dadurch gekennzeichnet, dass**
der Vibrationsgenerator (308, 310) so konfiguriert ist, dass er selektiv mindestens einen ersten Vibrationspegel und einen zweiten Vibrationspegel erzeugt.

2. Das System (100) nach Anspruch 1, wobei die Fluideinführungsdüse (246) das Fluid in eine Richtung des Perlenflusses von der Perlenquelle (102) zur Füllstation (108) einführt.

3. Das System (100) nach Anspruch 1, wobei die Fluideinführungsdüse (246) das Fluid selektiv einführt.

4. Das System (100) nach Anspruch 1, wobei das Fluid ein Gas ist.

5. Das System (100) nach Anspruch 1, wobei die Perlendüse (118) einen ersten Abschnitt und einen zweiten Abschnitt umfasst, wobei der erste Abschnitt und der zweite Abschnitt lösbar gekoppelt sind.

6. Das System (100) nach Anspruch 5, wobei zumindest einer von dem ersten Abschnitt oder dem zweiten Abschnitt ein magnetisches Element umfasst, wobei das magnetische Element wirksam ist, um den ersten Abschnitt mit dem zweiten Abschnitt lösbar zu koppeln.

7. Das System (100) nach Anspruch 1, wobei die Wiegestation (108) einen Lastsensor (314) umfasst.

8. Das System (100) nach Anspruch 1, das ferner eine Dosierstation (106) umfasst, die funktional zwischen der Wiegestation (104) und der Füllstation (108) gekoppelt ist.

9. Das System (100) nach Anspruch 8, wobei die Dosierstation (106) einen fluidbetriebenen Trichter (406) umfasst.

10. Das System (100) nach Anspruch 9, wobei der fluidbetriebene Trichter (406) eine Fluidöffnung (410) umfasst, die wirksam ist, um ein Fluid in einer Perlenflussrichtung hin zur Füllstation (108) auszustoßen.

11. Das System (100) nach Anspruch 1, wobei mindestens ein Teil der Polsterungskapsel ein luftdurchlässiges Material umfasst.

12. Das System (100) nach Anspruch 1, wobei die Vielzahl von Perlen einen Durchmesser zwischen 1 mm und 10 mm aufweisen.

## Revendications

1. Un système (100) de remplissage d'une capsule de rembourrage (*cushioning pod*) avec une pluralité de billes, le système comprenant :
une source de billes (102) configurée pour contenir une pluralité de billes ;
une station de remplissage (108) couplée de manière opérationnelle à la source de billes (102), la station de remplissage (108) comprenant :
(1) une buse d'insertion de fluide (246) pour introduire un fluide à partir d'une source de fluide (144) dans un coupleur fluidique (112) du système (100), sachant que le coupleur fluidique (112) est configuré pour transporter la pluralité de billes pour au moins une partie du couplage opérationnel depuis la source de billes (102) jusqu'à la capsule de rembourrage ; et
(2) une buse à perles (118), la buse à perles (118) couplée au coupleur fluidique (112) du système (100) et configurée pour être en interface avec la capsule de rembourrage afin de déposer la pluralité de perles dans la capsule de rembourrage ; et
une station de pesage (104) couplée de manière opérationnelle entre la source de billes (102) et la station de remplissage (108), la station de pesage (104) étant efficace pour exercer un pesage à taux variable, sachant que la station de pesage (108) comprend un générateur de vibrations (308, 310),
**caractérisé en ce que**
le générateur de vibrations (308, 310) est configuré pour générer sélectivement au moins un premier niveau de vibrations et un deuxième niveau de vibrations.

2. Le système (100) d'après la revendication 1, sachant que la buse d'insertion de fluide (246) introduit le fluide dans une direction d'écoulement des billes depuis la source de billes (102) vers la station de remplissage (108).

3. Le système (100) d'après la revendication 1, sachant que la buse d'insertion de fluide (246) introduit le fluide de manière sélective.

4. Le système (100) d'après la revendication 1, sachant que le fluide est un gaz.

5. Le système (100) d'après la revendication 1, sachant que la buse à perles (118) comprend une première portion et une deuxième portion, la première portion et la deuxième portion étant couplées de manière amovible.

6. Le système (100) d'après la revendication 5, sachant qu'au moins l'une parmi la première portion ou la deuxième portion comprend un élément magnétique, l'élément magnétique étant efficace pour coupler de manière amovible la première portion avec la deuxième portion.

7. Le système (100) d'après la revendication 1, sachant que la station de pesage (108) comprend un capteur de charge (314).

8. Le système (100) d'après la revendication 1, comprenant en outre une station de dosage (106) couplée de manière opérationnelle entre la station de pesage (104) et la station de remplissage (108).

9. Le système (100) d'après la revendication 8, sachant que la station de dosage (106) comprend un entonnoir (406) alimenté par fluide.

10. Le système (100) d'après la revendication 9, sachant que l'entonnoir (406) alimenté par fluide comprend un orifice à fluide (410) efficace pour expulser un fluide dans une direction d'écoulement de perles vers la station de remplissage (108).

11. Le système (100) d'après la revendication 1, sachant qu'au moins une portion de la capsule de rembourrage comprend un matériau perméable à l'air.

12. Le système (100) d'après la revendication 1, sachant que la pluralité de billes présente un diamètre compris entre 1 mm et 10 mm.
